# EUROPÄISCHE PATENTSCHRIFT

(11) **EP 0 808 212 B1**
(45) Veröffentlichungstag und Bekanntmachung des Hinweises auf die Patenterteilung: **07.04.1999**
(21) Anmeldenummer: 96901322.6
(22) Anmeldetag: 23.01.1996
(51) Int. Cl.: B01D 65/06, C12H 1/075

(54) **REINIGUNGSVERFAHREN FÜR MEMBRANFILTER**
METHOD OF CLEANING MEMBRANE FILTERS
PROCEDE DE NETTOYAGE POUR FILTRES A MEMBRANE

(30) Priorität: 01.02.1995 DE 19503060
(43) Veröffentlichungstag der Anmeldung: 26.11.1997
(73) Patentinhaber: HENKEL-ECOLAB GmbH & CO. OHG, 40591 Düsseldorf (DE)
(72) Erfinder: KRACK, Ralf, D-40237 Düsseldorf (DE); MANNERS, Helen, Bucks HP13 7BQ (GB)
(74) Vertreter: Hase, Christian, Dr.
(86) Internationale Anmeldenummer: EP9600258
(87) Internationale Veröffentlichungsnummer: WO9623579

(56) Entgegenhaltungen:
- WO-A-91/00333
- FR-A- 2 660 211
- PATENT ABSTRACTS OF JAPAN vol. 2, no. 46 (C-77), 28.März 1978 & JP,A,53 001178 (DAICEL KK), 7.Januar 1978, & DATABASE WPI Section Ch, Week 7807 Derwent Publications Ltd., London, GB; Class A88, AN 78-13318a
- PATENT ABSTRACTS OF JAPAN vol. 14, no. 90 (C [0691] , 20.Februar 1990 & JP,A,01 304007 (YUUHOO CHEM KK), 7.Dezember 1989, & DATABASE WPI Section Ch, Week 9004 Derwent Publications Ltd., London, GB; Class D25, AN 90-026200 & CHEMICAL ABSTRACTS, vol. 113, no. 8, 20.August 1990 Columbus, Ohio, US; abstract no. 62166, "Agents for washing ion exchange membranes"
- DATABASE WPI Week 7651 Derwent Publications Ltd., London, GB; AN 76-95160x XP002004914 & JP,A,51 125 958 (EBARA INFILCO CO) , 3.November 1976
- DESALINATION, Bd. 71, Nr. 3, März 1989, AMSTERDAM, NL, Seiten 325-335, XP000087751 GUN TRÄGARDH: "Membrane Cleaning"
- FOOD TECHNOLOGY, Bd. 47, Nr. 5, Mai 1993, CHICAGO, US, Seiten 104-108, XP000373050 K. M. REISTERER: "Mapping Protein Foulants on Polysulfone Membranes Using Microspectrophotomety"

## Beschreibung

Die Erfindung betrifft ein enzymatisches Verfahren zur Reinigung von Membranen, insbesondere von Membranen zur Mikrofiltration, die in Brauereien zur Filtration von Bier verwendet werden. Durch das erfindungsgemäße Reinigungsverfahren werden Verblockungen der Membran beseitigt, so daß zur Klarfiltration von Bier auf ökonomische Weise Mikrofiltrationsmembranen verwendet werden können. Hierdurch kann die bisher übliche Filtration über Kieselgur, die nach Ende der Gebrauchsdauer als Abfall beseitigt werden muß, durch eine wesentlich abfallärmere Membranfiltration ersetzt werden.

In Brauereien werden verstärkt Membranfiltrationsanlagen zu unterschiedlichen Zwecken eingesetzt. Beispielsweise genannt seien: 1) Kaltsterilisation von Bier mit Dead-End-Mikrofiltrationsmembranen direkt vor dem Füller, 2) Aufbereitung von Heferestbier sowie Rückbier mit Cross-Flow-Mikrofiltration und 3) Klarfiltration von Bier mit Cross-Flow-Mikrofiltration anstelle der Kieselgurfiltration (befindet sich noch im Versuchsstadium).

Bisher ist es praktisch nicht möglich, die beispielsweise aus Polypropylen bestehenden Filtermaterialien so zu reinigen, daß ein reibungsloser Betriebsablauf auf Dauer gewährleistet ist. Die Membranen unterliegen unterschiedlichen Verblockungsursachen. Zum einen bildet sich auf den Membranen eine Deckschicht, die zu Leistungsverlusten führt. Diese Deckschicht kann durch eine klassische Reinigung entfernt werden. Daneben findet aber auch zum anderen eine innere Verblockung der Membranporen statt, die bislang als irreversibel angesehen wurde. Dies äußert sich in einem kontinuierlichen Druckanstieg oder in einer Leistungsreduzierung der Membranen. Besonders bei der oben unter 3) genannten Klarfiltration fällt die mit zunehmender Membranverblockung einhergehende Produktveränderung wie beispielsweise Aufhellung des Biers und Entfernung von Aromastoffen unangenehm ins Gewicht. Die Verblockung kann aus einer sogenannten Primärverblockung bestehen, bei der Trübstoffe, Hefereste etc. auf der Membran abgelagert werden. Diese Art der Verblockung ist konventionell entfernbar. Weiterhin kann eine sogenannte Sekundärverblockung der Poren eintreten, die von Bierinhaltsstoffen hervorgerufen wird, die in den Poren der Membran adsorbieren. Hierbei kann es sich um Glucane, höhere Alkohole, Ester sowie Wachse, Polyphenole und Polysaccharide handeln. Diese Art der Porenverblockung kann nun erstmals mit dem erfindungsgemäßen Verfahren rückgängig gemacht werden.

In der Bierbrauerei ist es bekannt, soweit es nationale Regelungen erlauben, dem Bier Enzymmischungen zuzusetzen, die die Aufgabe haben, nicht stärkehaltige Polymere wie Glucan, Xylan und Cellulose abzubauen. Hierfür sind Enzymmischungen im Handel, die hauptsächlich aus β-Glucanase bestehen und Nebenaktivitäten aus Cellulase und Xylanase enthalten. Bei der Klarfiltration des Biers erhöhen solche Enzymzusätze die Filtrationsleistung und führen zu Einsparungen bei Filterhilfsmitteln. Weiterhin werden Glucan-Nachtrübungen verhindert. Zur Membranreinigung wurden derartige Enzyme noch nicht mit Erfolg eingesetzt.

Für diesen Zweck sind bisher lediglich beispielsweise in WO 91/333, Reinigungsmittel mit einem Gehalt an Protease und Glukanase oder gemäß Patent Abstracts of Japan Vol 14, No 90 (JP-A-1304007) Reinigungsmittel mit einzelnen Enzymen aus der Gruppe Chitinase, Cellulase, Beta-1,3-Glucanase, Pektinase und Protease vorgeschlagen worden. Gemäß Derwent Referat 78-13318A (JP-A-53001178) können zur Membranreinigung auch peroxidhaltige alkalische Lösungen verwendet werden.

Der Erfindung liegt die Aufgabe zugrunde, ein Reinigungsverfahren für Filtrationsmembranen, insbesondere für Membranen zur Mikrofiltration, bereitzustellen, mit dem die bei der Filtration von Bier auftretenden Verblockungen beseitigt werden können.

Diese Aufgabe wird gelöst durch ein Verfahren zum Reinigen von Filtrationsmembranen für die Bierfiltration, dadurch gekennzeichnet, daß man zumindest folgende Schritte ausführt:
a) Behandlung der Membran mit einer enzymhaltigen wäßrigen Lösung, wobei als Enzyme gleichseitig β-Glucanasen, Xylanasen und Cellulasen eingesetzt werden,
b) Reinigung mit einer sauren wäßrigen Reinigungslösung,
c) Reinigung mit einer peroxidhaltigen alkalischen Reinigungslösung.

Dabei ist es vorzuziehen, vor und nach jedem der einzelnen Teilschritte mit Wasser zu spülen.

Die im Teilschritt a) einsetzbare Enzymmischung, die vorzugsweise β-Glucanasen als Hauptkomponenten und Xylanasen und Cellulasen als Nebenkomponenten enthält, ist in der Brautechnik als Bierzusatz zur Verbesserung des Filtrationsverhaltens bekannt. Für den erfindungsgemäßen Einsatz zur Reinigung von Filtrationsmembranen enthält die Lösung vorzugsweise 0,5 bis 3 Gew.-% Enzyme. Weiterhin ist es bevorzugt, daß die wäßrige Enzymlösung außerdem 2 bis 10 Gew.-% Alkalimetall- und/oder Ammoniumphosphate, insbesondere in der Form der Triphosphate, enthält. Weiterhin ist es vorzuziehen, daß die Enzymlösung zur Einstellung des besonders wirksamen pH-Wertes im Bereich von etwa 4 bis etwa 6 1 bis 10 Gew.-% Carbonsäuren mit nicht ihr als 10 C-Atomen enthält. Hierfür sind Hydroxycarbonsäuren wie beispielsweise Milchsäure, Äpfelsäure, Weinsäure und insbesondere Citronensäure und Gluconsäure bevorzugt.

Die im Teilschritt a) einsetzbare enzymhaltige wäßrige Lösung weist vorzugsweise eine Temperatur zwischen 15 und 50 °C auf, wobei die Temperatur beispielsweise bei 25 °C liegen kann. Dabei ist es in der Regel ausreichend, die Reinigungslösung etwa eine Stunde lang auf die Membran einwirken zu lassen. Bei sehr stark verblockten Membranen kann jedoch auch eine längere Einwirkungszeit, beispielsweise von bis zu einer Woche, benötigt werden. Vorzugsweise geht man in diesem Teilschritt a) so vor, daß man zunächst die Konzentratseite der Membran durch kurzzeitiges Überströmen mit der Enzymlösung von einer gebildeten Deckschicht befreit. Diese Lösung verwirft man anschließend. Danach läßt man die Membran von frischer Enzymlösung durchströmen und sie anschließend in dieser Lösung bis zum Ende der erwünschten Einwirkungszeit stehen.

Nach der Einwirkung der wäßrigen Enzymlösung wird die Membran vorzugsweise mit Wasser gespült, wonach sich der erfindungsgemäße Teilschritt b), die Reinigung mit einer sauren wäßrigen Reinigungslösung, anschließt. Hierfür wird vorzugsweise eine saure wäßrige Reinigungslösung eingesetzt, die etwa 0,2 bis etwa 1,0 Gew.-% einer oder mehrerer Mineralsäuren enthält. Die Mineralsäuren sind vorzugsweise ausgewählt aus Salpetersäure und/oder Phosphorsäure. Geeignete Konzentrate solcher Reinigungslösungen sind im Handel erhältlich, beispielsweise unter dem Namen P3-ultrasil^{R}75 der Firma Henkel-Ecolab, Düsseldorf. Beispielsweise kann eine 1 gew.-%ige wäßrige Lösung dieses Handelsprodukts im Teilschritt b) eingesetzt werden. Die Temperatur dieser Reinigungslösung liegt vorzugsweise zwischen 30 und 60 °C, beispielsweise bei etwa 50 °C. Die saure wäßrige Reinigungslösung soll für einen Zeitraum zwischen 10 und 60 Minuten, beispielsweise für etwa 20 Minuten, auf die Membran einwirken.

Vorzugsweise folgt auf diesen Teilschritt wieder eine Zwischenspülung mit Wasser. Der nächste erfindungswesentliche Schritt ist c) die Reinigung mit einer peroxidhaltigen alkalischen Reinigungslösung. Dabei enthält die alkalische Reinigungslösung vorzugsweise 0,05 bis 0,3 Gew.-% Wasserstoffperoxid. Dies kann als solches oder in Form von Wasserstoffperoxid-abspaltenden Verbindungen wie beispielsweise Percarbonaten, Perboraten, Peroxosulfaten oder Peroxodisulfaten eingesetzt werden. Dabei wird die Konzentration der Wasserstoffperoxid-abspaltenden Verbindungen so gewählt, daß sich hieraus eine rechnerische Konzentration von 0,05 bis 0,3 Gew.-% Wasserstoffperoxid ergibt. Die Verwendung von Wasserstoffperoxid als solchem ist vorteilhaft. Als Alkalitätsträger enthält die alkalische Reinigungslösung vorzugsweise Alkalimetallhydroxide, wie beispielsweise Natrium- und insbesondere Kalium-hydroxid. Der Gehalt an Alkalimetall-hydroxid kann beispielsweise zwischen 0,1 und 0,5 Gew.-% liegen. Beispielsweise genannt sei ein Gehalt an Kalium-hydroxid von 0,3 Gew.-%. Weitere bevorzugte Komponenten der alkalischen Reinigungslösung sind 0,2 bis 0,5 Gew.-% anionische, nichtionische und/oder zwitterionische Tenside. Als anionische Tenside kommen beispielsweise Alkansulfonate mit C-Kettenlängen von 14 bis 16 in Betracht, als nichtionische Tenside vorzugsweise Ethoxylierungsprodukte von Fettalkoholen mit 12 bis 18 C-Atomen mit 20 bis 35 Ethylenoxidgruppen und als zwitterionische Tenside beispielsweise Cocosalkylamphocarboxypropionat in Betracht. Weiterhin enthält die alkalische Reinigungslösung vorzugsweise 0,02 bis 0,3 Gew.-% Chelatkomplexbildner wie beispielsweise Phosphonobutantricarbonsäure-salze und/oder Ethylendiamintetraacetat und/oder Nitrilotriacetat. Mit dieser alkalischen Reinigungslösung, die vorzugsweise eine Temperatur im Bereich zwischen 35 und 60 °C, beispielsweise 50 °C, aufweist, werden die Membranen im Teilschritt c) für eine Zeitdauer zwischen 10 und 60 Minuten, beispielsweise 20 Minuten, behandelt. Vorzugsweise schließt sich an diese Behandlung eine Spülung mit Wasser an.

Nach diesem Teilschritt c) ist das erfindungsgemäße Reinigungsverfahren abgeschlossen und die Durchgängigkeit der Membran weitgehend wieder hergestellt. Um die Membranen zuverlässig tensidfrei zu waschen, ist es jedoch vorzuziehen, einen erneuten sauren Reinigungsschritt mit einer tensidfreien Reinigungslösung vorzusehen. Hierfür kann die gleiche saure Reinigungslösung wie im Teilschritt b) verwendet werden, wobei deren Konzentration im Vergleich zu der im Teilschritt b) gewählten halbiert werden kann. Zeitdauer und Temperaturen entsprechen denjenigen des Teilschritts b). Nach dieser sauren Nachbehandlung ist eine erneute Wasserspülung empfehlenswert.

Das erfindungsgemäße Reinigungsverfahren wurde besonders zur Reinigung von Membranen entwickelt, die zur Mikrofiltration eingesetzt werden. Die Mikrofiltration ist als typisches Membrantrennverfahren im Stand der Technik bekannt. Siehe beispielsweise: Ullmann's Encyclopedia of Industrial Chemistry, 5. Auflage, 1991, Band 16, SS 194 und 195. Bei der Mikrofiltration werden Membranen aus unterschiedlichen Materialien eingesetzt, die Poren im Größenbereich 0,1 bis 10 Mikrometer aufweisen und die demnach größere Partikel zurückhalten. Dieser Trennprozeß erfordert üblicherweise eine hydrostatische Druckdifferenz über die Membran in der Größenordnung 10 bis 500 kPa.

Für die Anwendung des erfindungsgemäßen Reinigungsverfahrens ist das Membranmaterial nicht kritisch. Beispielsweise ist das Verfahren für Membranen aus Polypropylen geeignet. Weitere mögliche Membranmaterialien sind Polysulfon, Polyethersulfon, PVDF, Polyamid und Nylon H66. Aber auch Keramikmembranen wie beispielsweise solche aus Siliciumkarbid, Aluminiumoxid oder Titanoxid sind mit dem erfindungsgemäßen Verfahren zu reinigen. Die Membranen können als Rohrmodule, Plattenmodule oder als Wickelmodule ausgeführt sein.

Durch das erfindungsgemäße Reinigungsverfahren, das man vorzugsweise einmal täglich durchführt, können Verblockungen von Mikrofiltrationsmembranen bei der Bierfiltration verhindert bzw. rückgängig gemacht werden. Die hierdurch erzielte verlängerte Membranstandzeit erlaubt es, Mikrofiltrationsverfahren für die Klarfiltration von Bier ökonomisch vorteilhaft einzusetzen. Solche Filtrationsverfahren sind daher geeignet, die bisher übliche Filtration über Filterhilfsmittel wie beispielsweise Kieselgur, die nach Ende ihrer Gebrauchsdauer als zu entsorgender Müll anfallen, zu ersetzen.

Das erfindungsgemäße Verfahren wurde an einer Mikrofiltrationsmembran aus Polypropylen in Form eines Rohrmoduls mit einer Membranfläche von 0,2 m² und 40 m² erprobt, die zuvor durch Klarfiltration von frisch gebrautem Bier zum Verblocken gebracht wurde. Dabei wurden folgende Teilschritte ausgeführt:
1) Ausspülen der Anlage mit Frischwasser;
2) Reinigung mit einer enzymhaltigen Reinigungslösung gemäß Teilschritt a) für eine Stunde bei 25 °C;
3) Zwischenspülung mit Wasser;
4) Reinigung mit einer sauren wäßrigen Reinigungslösung gemäß Teilschritt b) (P3-ultrasil^{R}75, Henkel-Ecolab, Düsseldorf, Ansatz 1 %ig in Wasser) für 20 Minuten bei 50 °C;
5) Zwischenspülung mit Wasser;
6) Reinigung mit einer peroxidhaltigen alkalischen Reinigungslösung gemäß Teilschritt c): die wäßrige Lösung enthielt 0,14 Gew.-% H₂O₂, 0,3 Gew.-% Kaliumhydroxid, 0,1 Gew.-% Na₄-Ethylendiamintetraacetat und 0,32 Gew.-% einer Tensidmischung aus nichtionischen, zwitterionischen und anionischen Tensiden (Ethoxylierungsprodukt von Talgfettalkohol mit ca. 30 Ethylenoxideinheiten, Cocosamphocarboxypropionat und Alkansulfonat im Gewichtsverhältnis 30 : 1 : 1), Einwirkungsdauer 20 Minuten, Temperatur der Lösung 50 °C;
7) Zwischenspülung mit Wasser;
8) saure Nachspülung mit einer Reinigungslösung wie unter 4), jedoch mit halbierter Konzentration, Behandlungsdauer 20 Minuten, Temperatur der Lösung 50 °C,
9) Nachspülen mit Wasser.

Nach dieser Reinigungsfolge war die ursprüngliche Durchlässigkeit der Membran wieder hergestellt. Vergleichsversuche, in denen der erfindungsgemäße Teilschritt a) weggelassen oder mit anderen Enzymmischungen, die keine β-Glucanasen, Xylanasen und Cellulasen enthielten, führten nicht zu einer Aufhebung der Membranverblockung.

## Patentansprüche

1. Verfahren zum Reinigen von Filtrationsmembranen für die Bierfiltration, dadurch gekennzeichnet, daß man zumindest folgende Schritte ausführt:
a) Behandlung der Membran mit einer enzymhaltigen wäßrigen Lösung, wobei als Enzyme gleichzeitig β-Glucanasen, Xylanasen und Cellulasen eingesetzt werden,
b) Reinigung mit einer sauren wäßrigen Reinigungslösung,
c) Reinigung mit einer peroxidhaltigen alkalischen Reinigungslösung.

2. Verfahren nach Anspruch 1, dadurch gekennzeichnet, daß man vor und nach den Teilschritten a), b) und c) mit Wasser spült.

3. Verfahren nach einem oder beiden der Ansprüche 1 und 2, dadurch gekennzeichnet, daß die wäßrige Enzymlösung im Teilschritt a) 0,5 bis 3 Gew.-% Enzyme enthält, wobei β-Glucanasen die Hauptkomponenten, Xylanasen und Cellulasen Nebenkomponenten darstellen.

4. Verfahren nach Anspruch 3, dadurch gekennzeichnet, daß die wäßrige Enzymlösung 2 bis 10 Gew.-% Alkalimetall- und/oder Ammoniumphosphate und 1 bis 10 Gew-% Carbonsäuren mit nicht mehr als 10 C-Atomen enthält.

5. Verfahren nach einem oder mehreren der Ansprüche 1 bis 4, dadurch gekennzeichnet, daß die saure wäßrige Reinigungslösung im Teilschritt b) 0,2 bis 1,0 Gew.-% einer oder mehrerer Mineralsäuren enthält.

6. Verfahren nach Anspruch 5, dadurch gekennzeichnet, daß die Mineralsäuren ausgewählt sind aus Salpetersäure und/oder Phosphorsäure.

7. Verfahren nach einem oder mehreren der Ansprüche 1 bis 6, dadurch gekennzeichnet, daß die peroxidhaltige alkalische Reinigungslösung im Teilschritt c) 0,05 bis 0,3 Gew.-% Wasserstoffperoxid als solchem oder in Form einer Wasserstoffperoxid-abspaltenden Verbindung, 0,2 bis 0,5 Gew.-% anionische, nichtionische und/oder zwitterionische Tenside und 0,02 bis 0,3 Gew.-% Chelatkomplexbildner enthält.

8. Verfahren nach einem oder mehreren der Ansprüche 1 bis 7, dadurch gekennzeichnet, daß nach der alkalischen Reinigung des Teilschritts c) mit oder ohne Zwischenspülung mit Wasser eine erneute saure Reinigung erfolgt.

9. Verfahren nach einem oder mehreren der Ansprüche 1 bis 8, dadurch gekennzeichnet, daß es sich bei den zu reinigenden Membranen um Mikrofiltrationsmembranen handelt.

10. Verfahren nach Anspruch 9, dadurch gekennzeichnet, daß es sich um Membranen aus Polypropylen handelt.

## Claims

1. A process for cleaning filtration membranes for the filtration of beer, characterized in that it comprises at least the following steps:
a) treating the membrane with an enzyme-containing aqueous solution, β-glucanases, xylanases and cellulases being simultaneously used as the enzymes,
b) cleaning with an acidic aqueous cleaning solution,
c) cleaning with a peroxide-containing alkaline cleaning solution.

2. A process as claimed in claim 1, characterized in that the membrane is rinsed with water before and after steps a), b) and c).

3. A process as claimed in one or both of claims 1 and 2, characterized in that the aqueous enzyme solution used in step a) contains 0.5 to 3% by weight of enzymes, β-glucanases being the principal component and xylanases and cellulases being secondary components.

4. A process as claimed in claim 3, characterized in that the aqueous enzyme solution contains 2 to 10% by weight of alkali metal and/or ammonium phosphates and 1 to 10% by weight of carboxylic acids containing no more than 10 carbon atoms.

5. A process as claimed in one or more of claims 1 to 4, characterized in that the acidic aqueous cleaning solution used in step b) contains 0.2 to 1.0% by weight of one or more mineral acids.

6. A process as claimed in claim 5, characterized in that the mineral acids are selected from nitric acid and/or phosphoric acid.

7. A process as claimed in one or more of claims 1 to 6, characterized in that the peroxide-containing alkaline cleaning solution used in step c) contains 0.05 to 0.3% by weight of hydrogen peroxide as such or in the form of a compound releasing hydrogen peroxide, 0.2 to 0.5% by weight of anionic, nonionic and/or zwitterionic surfactants and 0.02 to 0.3% by weight of chelate complexing agents.

8. A process as claimed in one or more of claims 1 to 7, characterized in that another acidic cleaning step is carried out after the alkaline cleaning step c) with or without intermediate rinsing with water.

9. A process as claimed in one or more of claims 1 to 8, characterized in that the membranes to be cleaned are microfiltration membranes.

10. A process as claimed in claim 9, characterized in that the membranes are polypropylene membranes.

## Revendications

1. Procédé de nettoyage de membranes de filtration pour la filtration de la bière,
caractérisé en ce qu' on effectue au moins les étapes suivantes :
a) traitement de la membrane avec une solution aqueuse, dans laquelle on utilise comme enzymes simultanément, des β-glucanases, des xylanases et des cellulases,
b) nettoyage avec une solution de nettoyage aqueuse acide,
c) nettoyage avec une solution de nettoyage alcaline contenant un peroxyde.

2. Procédé selon la revendication 1,
caractérisé en ce qu'
avant et après les étapes partielles a), b) et c), on balaye avec de l'eau.

3. Procédé selon l'une des revendications 1 et 2, ou les deux,
caractérisé en ce que
la solution enzymatique aqueuse dans l'étape partielle a) contient de 0,5 à 3 % en poids d'enzyme, les β-glucanases représentant le composant principal, les xylanases et les cellulases les composants secondaires.

4. Procédé selon la revendication 3,
caractérisé en ce que
la solution enzymatique aqueuse contient de 2 à 10 % en poids de phosphates de métaux alcalins et/ou d'ammonium et de 1 à 10 % en poids d'acide carboxylique comportant au plus 10 atomes de carbone.

5. Procédé selon une ou plusieurs des revendications 1 à 4,
caractérisé en ce que
la solution de nettoyage acide aqueuse dans l'étape partielle b) contient de 0,2 à 1,0 % en poids d'un ou plusieurs acides minéraux.

6. Procédé selon la revendication 5,
caractérisé en ce que
les acides minéraux sont choisis parmi l'acide nitrique et/ou l'acide phosphorique.

7. Procédé selon une ou plusieurs des revendications 1 à 6,
caractérisé en ce que
la solution de nettoyage alcaline contenant un peroxyde dans l'étape partielle c) contient de 0,05 à 0,3 % en poids de peroxyde d'hydrogène en tant que tel ou sous la forme d'un composé libérant du peroxyde d'hydrogène, de 0,2 à 0,5 % en poids d'agents tensioactifs anioniques, non ioniques et/ou hermaphrodites, et de 0,02 à 0,3 % en poids de formateurs de complexes de chélates.

8. Procédé selon une ou plusieurs des revendications 1 à 7,
caractérisé en ce qu'après le nettoyage alcalin de l'étape partielle c) avec ou sans rinçage intermédiaire avec de l'eau, on procède à un nouveau nettoyage acide.

9. Procédé selon un ou plusieurs des revendications 1 à 8,
caractérisé en ce que,
pour ce qui est des membranes à nettoyer, il s'agit de membranes de microfiltration.

10. Procédé selon la revendication 9,
caractérisé en ce qu'
il s'agit de membranes de polypropylène.
